Europäisches Patentamt

(19) European Patent Office

Office européen des brevets

(11) Publication number: **0 173 846**
**A1**

## (12) EUROPEAN PATENT APPLICATION

(21) Application number: 85109279.1

(22) Date of filing: 25.07.85

(51) Int. Cl.⁴: **F 04 B 43/12**
**F 16 D 1/08**

(30) Priority: 07.08.84 US 638605

(43) Date of publication of application:
**12.03.86 Bulletin 86/11**

(84) Designated Contracting States:
**BE CH DE FR GB IT LI NL SE**

(71) Applicant: **ABBOTT LABORATORIES**
**14th Street and Sheridan Road North St**
**North Chicago Illinois 60064(US)**

(72) Inventor: Zeigler, John M.
**4150 Harper Avenue**
**Gurnee Illinois 60031(US)**

(74) Representative: Modiano, Guido et al,
**MODIANO, JOSIF, PISANTY & STAUB Modiano &**
**Associati Via Meravigli, 16**
**I-20123 Milan(IT)**

(54) **Removable peristaltic pump head.**

㉝ A rotatable peristaltic pump head (10) includes a spring member (9) in a central aperture (19) so that it may be removably positioned on a drive shaft.(18)

FIG. 1

EP 0 173 846 A1

REMOVABLE PERISTALTIC PUMP HEAD

Background of the Invention

This invention relates to rotatable peristaltic pump heads. More specifically this invention relates to rotatable peristaltic pump heads which may be removably mounted to a drive shaft.

In peristaltic pumps which transform rotating motion into repeated and successive compression of flexible tubing, rollers are typically used to provide the repetitive and successive compressive forces on the flexible tubing. While the mechanics of the operation of a peristaltic pump utilizing rollers to compress flexiole tubing is quite simple the problem remains to repetitively obtain accurate flow rates from the pump. The flow rate from peristaltic pumps is affected both by the position of the rollers with respect to the flexiole tubing and the uniformity of the successive compressive impulses imparted to the flexible tubing by the rollers. Because the flexible tubing is a replaceable part within the configuration of the pump head, the maintenance of predictable and accurate flow rates necessitates accurate positioning of the rotating pump head with respect to the flexible tubing. In order to maintain this accurate positioning of the rotating pump head and the flexible tubing peristaltic pumps typically are found with a rotatable pump head permanently and rigidly affixed to the rotating drive shaft. This rigid and permanent mounting of the rotatable pump head assures that the accuracy of the peristaltic pump is maintained because the amount of compression of the flexible tubing is uniform throughout the rotation of the drive shaft. While solving the problem of predictability and accuracy of flow rate, the practice of rigidly and permanently affixing the pump head to the drive shaft has created a peristaltic pump which is exceedingly difficult for health care personnel to clean and maintain. This problem is particularly severe when the peristaltic pump is used for the transfer of enteral fluids to a patient. It is not uncommon for some enteral fluid to flow down the outside of the flexible tubing. As enteral fluids are characterized as being thick and sticky, any drying of these fluids on pump parts can affect future pump operation.

In a rigidly affixed rotating pump head mechanical disassembly of the pump head is normally required for thorough cleaning. Such disassembly of the pump head presents complex problems for health-care personnel. These problems are normally solved either by doing nothing and operating the pump until it stops or taking the pump out of service and having it cleaned by professional health care equipment maintenance personnel.

It is therefore an advantage of the present invention to provide a rotatable pump head for a peristaltic pump which pump head may be easily removed for cleaning yet at the same time be readily repositionable with respect to the pump drive shaft so that accurate and predictable flow rates from the peristaltic pump are maintained.

Summary of the Invention

A rotatable pump head used with a peristaltic pump is positioned and mounted with respect to a rotating pump drive shaft by biasing means within a central aperture in the pump head. The biasing means are oriented parallel to the pump drive shaft. Specifically, the biasing means used in the preferred embodiment consists of a leaf spring which is positioned with the central arcuate aperture in the rotatable pump head. The leaf spring exerts uniform pressure parallel to the long axis of the rotating pump drive shaft. In this manner the rotatable peristaltic pump head is not displaced from a true positional center with respect to the pump drive shaft. This positioning of the rotatable peristaltic pump head with respect to the rotating pump drive shaft eliminates any eccentric motion of the rotatable pump head which would result in inaccurate and unpredictable flow rates. The rotatable peristaltic pump head may be repetitively removed, cleaned and repositioned on the rotating pump drive shaft without affecting the accuracy of fluid flow from the peristaltic pump.

Brief Description of the Drawings

A better understanding of the device of the present invention may be had by reference to the drawings wherein:

FIGURE 1 is a front elevational view of a peristaltic pumping system including the removable rotatable pump head of this invention.

FIGURE 2 is a front elevational view of the removable rotatable pump head.

FIGURE 3 is a top view of the removable rotatable pump head shown in FIGURE 1.

FIGURE 4 is a sectional view taken along line 4-4 of FIGURE 2.

FIGURE 5 is a sectional view similar to FIGURE 4 of a first alternative embodiment.

Detailed Description of the Embodiments

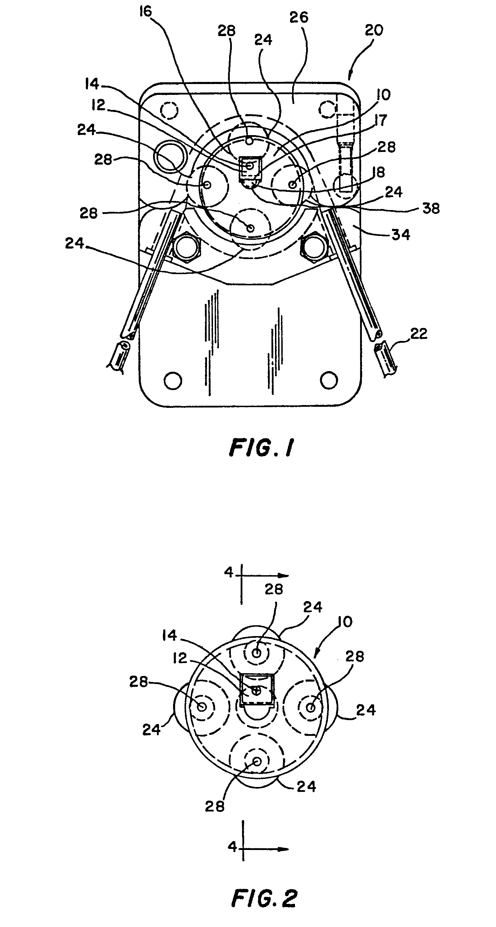

The peristaltic pump, generally 20 shown in FIGURE 1 is characterized as having four main parts, specifically a rotatable pump head 10, a tubing guide member 34, a pressure plate 26 and flexible tubing 22. The pumping of fluid through flexible tubing 22 is caused by the repeated and successive compression of flexible tubing 22 by rotatable members 24 which are mounted around the periphery of rotatable pump head 10. Drive shaft 18 transmits the turning force for rotatable pump head 10 from a motor which is connected to a gear drive (not shown). Rotatable members 24 rotate on individual axles 28 during their arcuate contact with flexible tubing 22. Tubing guide member 34 is provided to properly position flexible tubing 22 with respect to rotatable members 24. Pressure plate 26 provides an arcuate surface 11 against which rotatable members 24 repetitively and successively compress flexible tubing 22.

The removable rotatable pump head 10 of this invention is best described by reference to FIGURES 2, 3 and 4. In FIGURES 2, 3 and 4 pump head 10 is shown apart from the other portions of peristaltic pump 20 which are shown in FIGURE 1, specifically, guide member 34, pressure plate 26 and flexible tubing 22. Removable rotatable pump head 10 consists of three main parts; base member 16, rotatable members 24 and leaf spring 12. Of particular importance to this invention is leaf spring 12 which is affixed to the base member 16 of removable rotatable pump head 10 by screw 14. While screw 14 is used in the preferred embodiment it will be understood that other suitable methods of attachment such as a rivet or a weld may be used.

Each rotatable member 24 is held in position with respect to base member 16 by an axle 18 which projects through a hole 29 formed in base member 16. Axles 28 are characterized as having a head 32 which seats within recesses 36 on rotatable members 24. Bushings 30 may be placed on either side of rotatable members 24 to ease the turning of rotatable members 24 as they contact flexible tubing 22 as shown in FIGURE 1.

## Operation

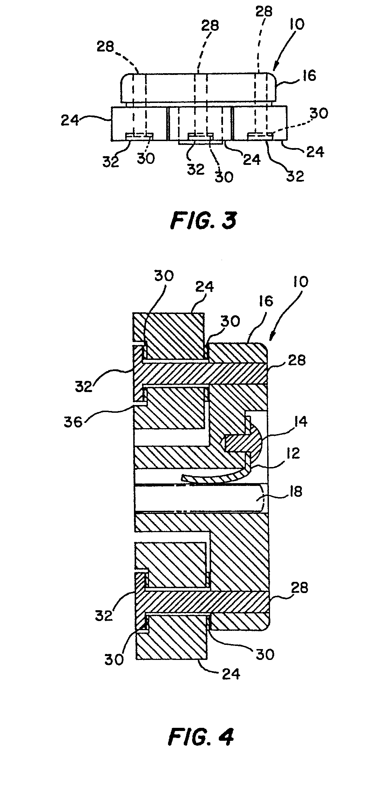

Peristaltic pump 20 is assembled as shown in FIGURES 1 and 4. Removable rotatable pump head 10 is placed on drive shaft 18 by inserting drive shaft 18 into shaped aperture 19. As may be best seen in FIGURES 1 and 4 the contact between shaped aperture 9, and drive shaft 18 (shown in phantom) causes leaf spring 12 to be compressed. When removable rotatable pump head 10 is in position with respect to drive shaft 18 the force generated by the compression of leaf spring 12 against flat 17 of drive shaft 18 in conjunction with the interfitment of round portion 38 of drive shaft 18 within aperture 19 will cause rotatable pump head 10 to be concentrically positioned with respect to drive shaft 18. As pump head 10 rotates the biasing action of leaf spring 12 will maintain rotatable pump head 10 in the same position with respect to drive shaft 18 throughout the entire circular path of rotatable pump head 20. Consequently rotatable members 24 will stay in the same spatial relationship to flexible tubing 22. As rotatable members 24 move in and out of contact with flexible tubing 22 they in turn will rotate upon their respective axles 28.

When it is desired to remove pump head 10 from peristaltic pump 20 for cleaning; base member 16 is grasped and pulled directly away from drive shaft 18. The shape of leaf spring 12 and its orientation parallel to drive shaft 18 will permit it to slide along flat 17 of drive shaft 18 thereby enabling rotatable pump head 10 to be removed from drive shaft 18 for cleaning.

When it is desired to reassemble peristaltic pump 20 removable rotatable pump head 10 is held in such a position that the leaf spring 12 will contact flat 17 on drive shaft 18. In this manner rotatable pump head 10 may be slid onto drive shaft 18 and made ready for operation.

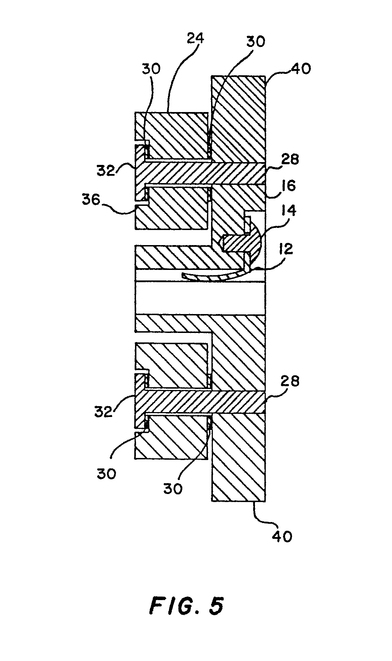

In an alternate embodiment shown in FIGURE 5 it may be seen that a projection 40 can be formed on base member 16 so that tubing 22 may be confined to rollers 24. This projection extends in a substantially perpendicular manner to the surfaces of rotatable member 24 which are in direct contact with flexible tubing 22.

The foregoing invention can now be practiced by those skilled in the art. Such skilled persons will know that the invention is not necessarily restricted to the embodiments presented herein. The scope of the invention is to be defined by the terms of the following claims, as given meaning by the preceding description.

CLAIMS

1. A drive shaft-mounted rotatable peristaltic pump head for successively compressing flexible tubing comprising:

a base member having a centrally disposed shaped aperture constructed and arranged to operatively engage the drive shaft;

a plurality of rotatable members for compressing flexible tubing spaced about said base member; and

means to bias said base member into a position substantially concentric with the drive shaft, said means to bias said base member extending into said shaped aperture being substantially parallel to the axis of the drive shaft;

whereby said pump head may be removably mounted and positioned on the drive shaft.

2. The pump head as defined in Claim 1 wherein said means to bias said base member is a leaf spring.

3. The pump head as defined in Claim 2 wherein said leaf spring is rigidly affixed to the base member.

4. The pump head as defined in Claim 1 wherein said base member forms a partition substantially perpendicular to the surface of said rotatable members which compress the flexible tubing.

0173846

5. A peristaltic pumping system for successively compressing flexible tubing comprising:

an arcuate surface against which the flexible tubing is compressed;

a drive shaft mounted rotatable pump head constructed and arranged to compress the flexible tubing against said arcuate surface, said rotatable pump head further comprising:

a base member having a centrally disposed arcuate-shaped aperture constructed and arranged to operatively engage said drive shaft;

a plurality of rotatable members for compressing the flexible tubing spaced about said base member; and

means to bias said base member into a position substantially concentric with the drive shaft, said means to bias said base member extending into said shaped aperture and being·substantially parallel to the axis of the drive shaft;

tubing guide member constructed and arranged to position the flexible tubing with respect to said rotatable pump head;

whereby said pump head may be removably mounted and positioned on said drive shaft.

6. The pump head as defined in Claim 5 wherein said means to bias said base member is a leaf spring.

7. The pump head as defined in Claim 6 wherein said leaf spring is rigidly affixed to the base member.

8. The pump head as defined in Claim 5 wherein said base member forms a partition substantially perpendicular to the surface of said rotatable members which compress the flexible tubing.

0173846

9.  A mounting system for a peristaltic pump head having a base member, a centrally disposed shaped arcuate aperture constructed and arranged to receive a drive shaft and a plurality of rotatable members for compressing flexible tubing, said mounting system comprising:

means to bias said base member into a position substantially concentric with the drive shaft, said means to bias said base member extending into said aperture and being substantially parallel to the axis of said drive shaft;

whereby said pump head may be removably mounted and positioned on the drive shaft.

10.  The mounting system as defined in Claim 9 wherein said means to bias said base member is a leaf spring.

FIG. 1

FIG. 2

FIG. 3

FIG. 4

3/3

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 431 864 (JONES)<br><br>* Column 2, lines 49-62; figures 1,2 * | 1,4,5,8 | F 04 B 43/12<br>F 16 D 1/08 |
| Y | | 2,3,6,7 | |
| | --- | | |
| Y | FR-A-2 516 607 (KLEIN, SCHANZLIN & BECKER AG)<br>* Page 2, lines 10-25; figures 1-3 * | 2,3,6,7 | |
| | --- | | |
| A | DE-B-1 155 341 (TECHNICON)<br><br>* Column 5, line 36 - column 6, line 8; figures 3,4 * | 1,4,5,8 | |
| | ----- | | |

TECHNICAL FIELDS SEARCHED (Int. Cl.4)

F 04 B
F 16 D

The present search report has been drawn up for all claims

| Place of search | Date of completion of the search | Examiner |
|---|---|---|
| THE HAGUE | 19-11-1985 | VON ARX H.P. |